# FASCICULE DE BREVET EUROPEEN

(11) **EP 0 509 883 B1**
(45) Date de publication et mention de la délivrance du brevet: **01.12.1993**
(21) Numéro de dépôt: 92400988.9
(22) Date de dépôt: 09.04.1992
(51) Int. Cl.: B60T 8/36, B60T 8/40, H02K 23/04

(54) **Dispositif hydraulique de freinage**
Hydraulische Bremsvorrichtung
Hydraulic braking device

(30) Priorité: 17.04.1991 FR 9104705
(43) Date de publication de la demande: 21.10.1992
(73) Titulaire: ALLIEDSIGNAL EUROPE SERVICES TECHNIQUES, 93700 Drancy (FR)
(72) Inventeur: Pichon, Jean-Michel, c/o BENDIX EUROPE, F-93700 Drancy (FR); Bourlon, Philippe, c/o BENDIX EUROPE, F-93700 Drancy (FR)
(74) Mandataire: Bentz, Jean-Paul

(56) Documents cités:
- EP-A- 0 176 839
- EP-A- 0 373 551
- EP-A- 0 379 957
- EP-A- 0 449 320
- WO-A-83/01929
- FR-A- 2 386 924
- FR-A- 2 619 871
- US-A- 4 568 131
- PATENT ABSTRACTS OF JAPAN vol. 7, no. 279 (M-262)(1424) 13 Décembre 1983

## Description

La présente invention concerne un dispositif hydraulique de freinage de roues, en particulier pour un circuit de freinage des roues d'un véhicule, comprenant, entre une chambre d'un maître-cylindre et au moins un moteur de frein, une pluralité d'électrovalves et une pompe hydraulique entraînée par un moteur électrique incluant un rotor disposé entre deux paliers et enfermé dans un manchon cylindrique, ce rotor entraînant en rotation une came excentrée imprimant un mouvement alternatif de translation à des pistons radiaux,

Un tel dispositif est généralement utilisé pour assurer les fonctions d'anti-blocage des roues au freinage et d'anti-patinage des roues à l'accélération.

Les documents US-A-4 568 131, EP-A-0 379 957 et EP-A-0 373 551 décrivent, parmi beaucoup d'autres, un dispositif de ce type.

En règle générale, un tel dispositif est constitué par deux sous-ensembles. L'un est hydro-électrique et contient les canaux de circulation du fluide, les électrovalves et éventuellement différents tiroirs hydrauliques, tandis que l'autre est constitué uniquement par le moteur d'entraînement des pistons de la pompe. En effet, les technologies mises en oeuvre dans chacun de ces sous-ensembles sont tellement différentes que chacun de ces sous-ensembles est fabriqué par des corps de métier différents, le sous-ensemble comprenant le moteur électrique n'étant réuni opérationnellement à l'autre sous-ensemble qu'en fin d'assemblage du dispositif.

Or de nombreux problèmes se posent pour l'ensemble complet. Parmi ceux-ci on peut citer la complexité des connexions électriques du fait du milieu hostile où le dispositif doit fonctionner, le bruit résultant du fonctionnement opérationnel du dispositif, le refroidissement du moteur, notamment lorsque le dispositif fonctionne en mode d'anti-patinage à l'accélération, etc... A cela s'ajoutent la nécessité de réduire les dimensions extérieures du dispositif vu le peu de place dont on dispose dans le compartiment moteur d'un véhicule moderne, et, bien sûr, la nécessité de réduire le coût de ce dispositif sans en altérer les performances. La présente invention vise à résoudre les problèmes précités tout en obtenant les réductions sus-mentionnées.

Selon l'invention, la sortie de refoulement de la pompe est reliée aux électrovalves par l'intermédiaire de tiroirs hydrauliques au moyen de canaux de circulation de fluide, tandis que le manchon cylindrique est en matériau métallique, ce manchon étant lui-même enfermé dans un boîtier en matériau amagnétique, les canaux de circulation de fluide et les électrovalves s'étendant dans le boîtier.

On obtient ainsi les avantages recherchés, à savoir une augmentation des inerties thermique et phonique, ainsi qu'un refroidissement par circulation de fluide autour du moteur. En outre, les connexions électriques peuvent être alors réalisées dans un espace déterminé et la longueur axiale du dispositif peut être considérablement réduite.

Si, en plus, les axes des électrovalves et des canaux sont substantiellement parallèles à celui du moteur, on obtient une nette réduction du coût de fabrication du fait de la facilité d'usinage de la pièce.

De préférence, le boîtier est fermé radialement de part et d'autre du manchon métallique au moyen de couvercles dont l'un comporte les connexions électriques et l'autre les pistons de pompe et les tiroirs hydrauliques. Des moyens de fixation, tels que des vis, maintiennent les couvercles contre le boîtier de façon étanche pour les parties hydrauliques.

Le boîtier peut favorablement être réalisé en aluminium ou en un matériau thermodurcissable.

L'invention sera mieux comprise et d'autres buts, avantages et caractéristiques de celle-ci apparaîtront plus clairement à la lecture de la description qui suit d'un mode de réalisation préféré donné à titre non limitatif et à laquelle sont annexées trois planches de dessins sur lesquelles :
- La Figure 1 est une vue schématique en coupe axiale d'un dispositif selon l'invention comportant 4 électrovalves ;
- La Figure 2 est une vue du dispositif de la Figure 1 en coupe dans un plan parallèle à l'axe et incluant les axes de deux électrovalves adjacentes ;
- La Figure 3 est une vue du dispositif de la Figure 1 en coupe selon la ligne III-III de la Figure 4 ;
- La Figure 4 est une vue en coupe radiale selon la ligne IV-IV de la Figure 3 ; et
- La Figure 5 est une vue en coupe axiale du dispositif de la Figure 1 après rotation de 45° autour de l'axe.

En référence maintenant aux Figures, on a représenté schématiquement selon diverses coupes, un même dispositif préféré selon la présente invention.

Le moteur électrique est ici constitué d'un rotor 10 disposé sensiblement dans l'axe du dispositif et dont l'arbre 8 tourne sur des paliers 12, 14. Les bobines du rotor 10 sont en regard d'une pluralité d'aimants permanents 18 fixés à un manchon cylindrique 20 en matériau métallique destiné à fermer le champ magnétique. De façon classique, des charbons 22 assurent alternativement la connexion électrique avec les bobines du rotor 10.

L'arbre 8 du rotor 10 est solidaire d'une came excentrée 24 transformant le mouvement de rotation du rotor en un mouvement alternatif de translation des pistons radiaux 26 d'une pompe.

Le manchon 20 est enfermé dans un boîtier 30 réalisé dans un matériau amagnétique par exemple en aluminium ou dans un matériau thermodurcissable présentant une certaine épaisseur destinée à augmenter les inerties thermique et phonique du dispositif. Dans l'épaisseur de ce boîtier ont été pratiqués des canaux 32, 34 de circulation du fluide permettant une certaine évacuation des calories engendrées par la mise en service du moteur. Ces canaux 32 s'étendent longitudinalement dans le boîtier 30 et présentent, de préférence des axes substantiellement parallèles à celui du rotor.

Egalement dans le boîtier 30, on a disposé quatre électrovalves 36 (dans l'exemple représenté) dont les axes sont également parallèles à celui du rotor 10, de façon à former sensiblement un carré en vue axiale.

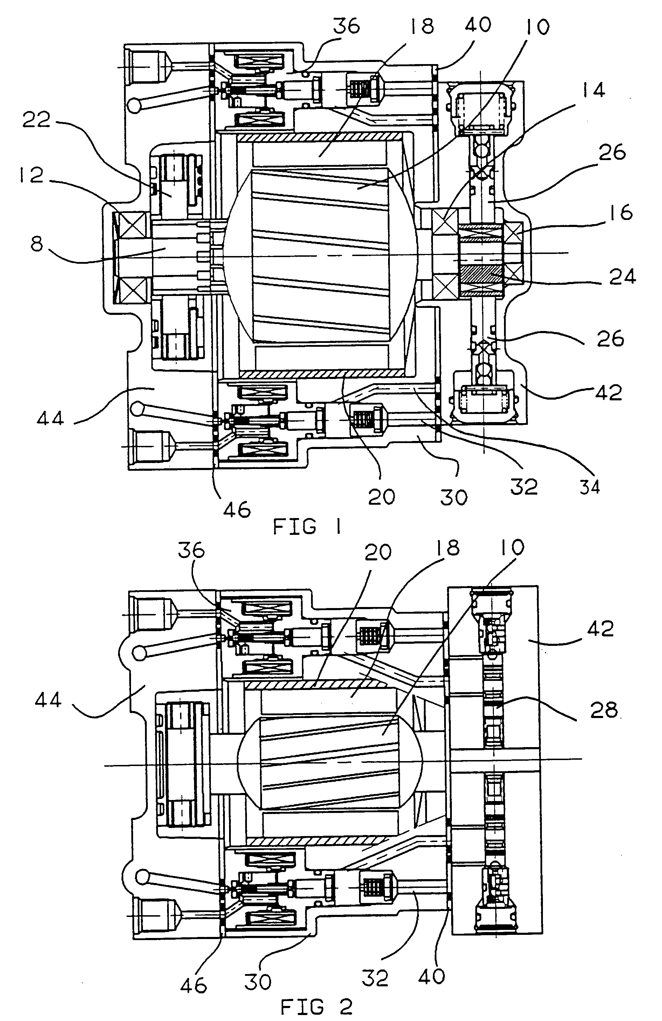

Le boîtier 30 est fermé axialement par un couvercle radial 42 qui inclut les pistons 26 de pompe ainsi que les paliers 14 et 16 de l'arbre 8 du rotor 10 et de la came 24, ainsi que les tiroirs habituels de distribution 28 (Figure 2). Entre le couvercle 42 et le boîtier 30, est disposée une plaque 40 assurant les diverses connexions hydrauliques entre les parties hydrauliques incluses dans le couvercle 42 et celles incluses dans le boîtier 30.

Cette plaque 40, comme la plaque 46 que l'on verra ultérieurement, est fine et réalisée par exemple en aluminium, percé et usiné de façon appropriée pour réaliser des passages de fluide entre les canaux du boîtier 30 et ceux du couvercle correspondant. Des joints assurent l'étanchéité de chaque passage lorsque la plaque est compressée entre le boîtier et le couvercle.

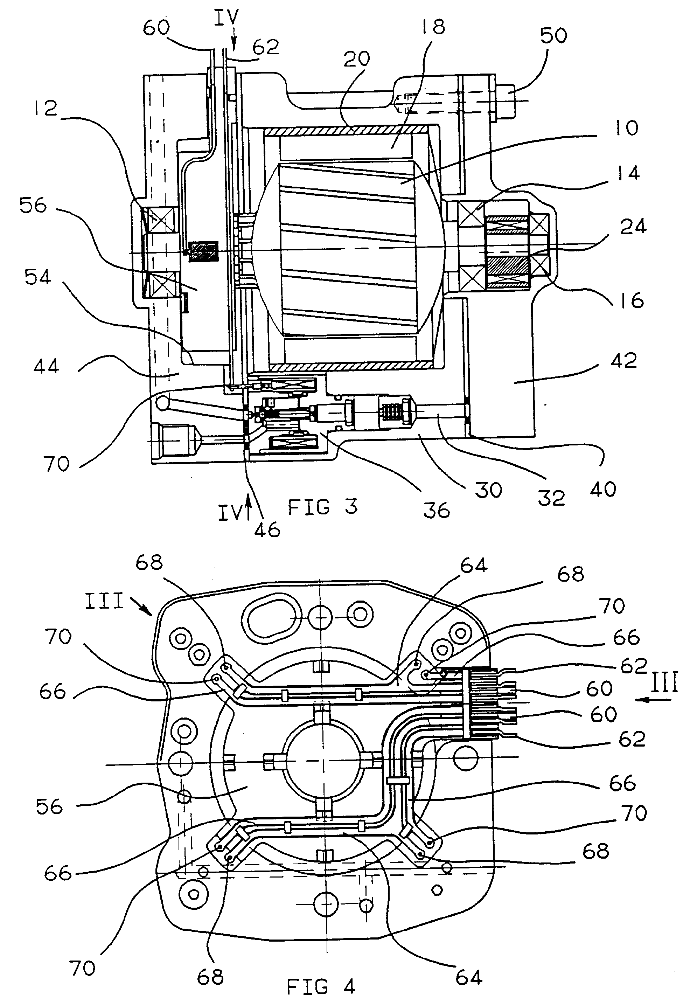

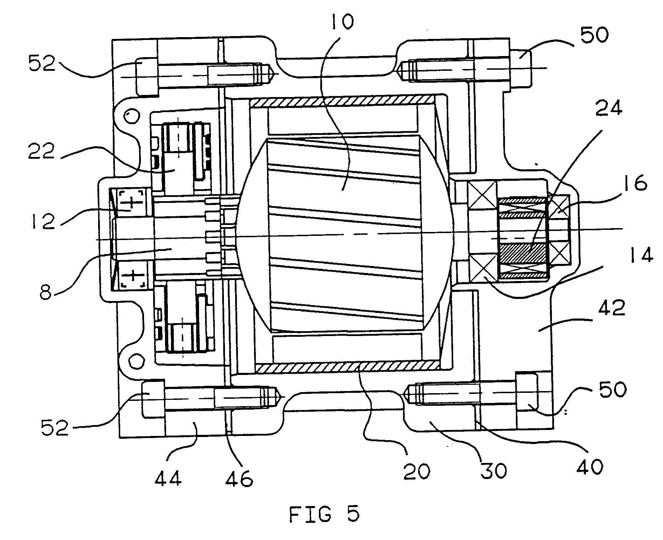

Un moyen de fixation, par exemple des vis 50 (Fig. 3 et 5), assure un maintien ferme du couvercle 42 sur le boîtier 30 de façon étanche pour les parties hydrauliques en s'opposant notamment aux pressions transmises par le fluide circulant dans les canaux.

De l'autre côté, le boîtier 30 est fermé par un couvercle 44 incluant les connexions électriques, les charbons 22 et le palier 12 de l'arbre 8 du rotor 10, ainsi que les piquages hydrauliques de connexion vers l'extérieur du dispositif.

Entre le couvercle 44 et le boîtier 30 est également disposée une plaque 46 assurant les connexions hydrauliques entre eux, cette plaque 46 étant du type décrit ci-avant.

Un moyen de fixation, par exemple des vis 52 (Fig. 5), assure la fixation du couvercle 44 sur le boîtier 30.

Comme représenté plus clairement Fig. 3, le couvercle 44 comporte un évidement central 54 dans lequel est disposé un module 56 de connexions électriques.

Ce module 56 inclut notamment un connecteur 60 relié aux charbons 22 et assurant l'alimentation électrique du moteur, ainsi qu'un deuxième connecteur dont le nombre de broches 62 dépend du nombre d'électrovalves 36 mises en oeuvre dans le dispositif. Un premier circuit électrique est imprimé sur une face de ce module pour relier le connecteur 60 aux charbons 22, et un autre circuit électrique est imprimé sur l'autre face de ce module 56 pour amener l'alimentation électrique des broches 62 aux électrovalves 36. Ce dernier circuit imprimé comporte une piste conductrice 64 reliée à la masse et commune à l'une 68 des broches de chaque électrovalve, et une piste conductrice 66 propre à chacune des électrovalves et reliée à l'autre broche 70 des électrovalves 36. Sur la Figure 3, on voit la connexion à la broche 70 de l'électrovalve 36.

On comprendra qu'on pourra aisément disposer sur ce module 56 d'autres composants tel qu'un filtre lissant le courant ou un capteur de la vitesse de rotation du moteur.

Comme représenté sur les Figures, les connexions électriques des électrovalves se trouvent dans un même plan radial, et ce dernier est adjacent au plan des connexions électriques du rotor.

On obtient ainsi un module 56 autonome, facile à mettre en place, et réalisant directement les connexions électriques requises.

Le boîtier 30 présentant une épaisseur importante, il devient possible de coller les aimants permanents 18 sur la paroi intérieure du manchon 20 sans effet pervers, et d'utiliser des aimants en terres rares, du fait de l'inertie thermique améliorée du dispositif.

Les couvercles 42 et 44 peuvent être réalisés également en aluminium ou en un matériau thermodurcissable. Cependant le couvercle 42 qui inclut les pistons 26 de pompe pourra alternativement être réalisé en fonte de manière à éviter la mise en place de chemises.

La conception modulaire qui vient d'être écrite permet un gain de temps appréciable dans l'assemblage en série du dispositif, ainsi qu'une réduction importante du coût du fait de la simplicité des usinages requis de chaque élément. Enfin on a noté une diminution sensible des pertes de charge dans le fluide dûe, sans doute, à des connexions hydrauliques plus simples.

Dans un mode de réalisation, on a ajouté dans le boîtier, une capacité hydraulique (non représentée) de fluide à basse pression permettant encore d'augmenter les échanges thermiques. Cette capacité présente, de préférence, un axe longitudinal parallèle à celui du rotor 10.

## Revendications

1. Dispositif hydraulique de freinage de roues, notamment pour des fonctions d'antiblocage et/ou d'antipatinage des roues dans un circuit de freinage d'un véhicule, comprenant entre une chambre d'un maître-cylindre et au moins un moteur de frein, une pluralité d'électrovalves (36) et une pompe hydraulique entraînée par un moteur électrique incluant un rotor (10) disposé entre deux paliers (12, 14) et enfermé dans un manchon cylindrique (20), ce rotor entraînant en rotation une came excentrée (24) imprimant un mouvement alternatif de translation à des pistons radiaux (26), caractérisé en ce que la sortie de refoulement de la dite pompe est reliée aux dites électrovalves (36) par l'intermédiaire de tiroirs hydrauliques (28) au moyen de canaux de circulation du fluide (32, 34), en ce que le dit manchon cylindrique (20) est en matériau métallique, ce manchon étant lui-même enfermé dans un boîtier (30) en matériau amagnétique, et en ce que les canaux de circulation du fluide (32, 34) et les électrovalves (36) s'étendent dans le dit boîtier (30).

2. Dispositif hydraulique de freinage des roues selon la revendication 1, caractérisé en ce que les dites électrovalves (36) et les dits canaux de circulation présentent des axes longitudinaux substantiellement parallèles à celui du rotor (10) du dit moteur.

3. Dispositif hydraulique de freinage des roues selon la revendication 1 ou 2, caractérisé en ce qu'il comprend en outre au moins une capacité à basse pression disposée dans le dit boîtier (30) et présentant un axe longitudinal substantiellement parallèle à celui du dit rotor.

4. Dispositif hydraulique de freinage des roues selon l'une quelconque des revendications précédentes, caractérisé en ce que les connexions électriques (62, 64, 66, 68, 70) des dites électrovalves (36) sont sensiblement dans un même plan radial.

5. Dispositif hydraulique de freinage des roues selon la revendication 4, caractérisé en ce que le dit plan radial des connexions électriques (62, 64, 66, 68, 70) des dites électrovalves (36) est sensiblement adjacent au plan des connexions électriques du dit rotor (10).

6. Dispositif hydraulique de freinage des roues selon l'une quelconque des revendications précédentes, caractérisé en ce que l'un (12) des dits paliers est inclus dans un premier couvercle (44) fermant une extrémité radiale du dit boîtier (30) et comprenant les circuits électriques de commande des dites électrovalves et du dit moteur.

7. Dispositif hydraulique de freinage des roues selon la revendication 6, caractérisé en ce que le dit premier couvercle (44) comporte un évidement central (54) dans lequel est logé un module (56) de connexions électriques.

8. Dispositif hydraulique de freinage des roues selon la revendication 7, caractérisé en ce qu'un circuit électrique est imprimé sur une face du dit module (56) pour alimenter en puissance le dit moteur et un deuxième circuit électrique est imprimé sur l'autre face du dit module (56) pour l'alimentation électrique des dites électrovalves (36).

9. Dispositif hydraulique de freinage des roues selon l'une quelconque des revendications 6 à 8, caractérisé en ce qu'une première plaque (46) est disposée entre le dit premier couvercle (44) et le dit boîtier (30) pour assurer les connexions hydrauliques entre eux.

10. Dispositif hydraulique de freinage des roues selon l'une quelconque des revendications précédentes, caractérisé en ce que l'autre (14) des dits paliers est inclus dans un deuxième couvercle (42) fermant l'autre extrémité radiale du dit boîtier (30) et qui enferme des pistons radiaux (26) de pompe et des tiroirs hydrauliques (28).

11. Dispositif hydraulique de freinage des roues selon la revendication 10, caractérisé en ce que la dite came excentrée (24) est disposée entre deux paliers (14, 16) inclus dans le dit deuxième couvercle (42).

12. Dispositif hydraulique de freinage des roues selon la revendication 10 ou 11, caractérisé en ce qu'une deuxième plaque (40) est disposée entre le dit boîtier (30) et le dit deuxième couvercle (42) pour assurer les connexions hydrauliques entre eux.

13. Dispositif hydraulique de freinage des roues selon l'une quelconque des revendications 6 à 12, caractérisé en ce qu'un moyen de fixation (50, 52) maintient fermement les dits couvercles contre le dit boîtier de façon étanche pour les parties hydrauliques.

14. Dispositif hydraulique de freinage des roues selon l'une quelconque des revendications précédentes, caractérisé en ce qu'au moins l'un des dits boîtiers (30) et couvercles (42, 44) est réalisé dans un matériau thermodurcissable.

15. Dispositif hydraulique de freinage des roues selon l'une quelconque des revendications précédentes 1 à 13, caractérisé en ce qu'au moins l'un des dits boîtier (30) et couvercles (42, 44) est réalisé en aluminium.

16. Dispositif hydraulique de freinage des roues selon l'une quelconque des revendications précédentes, caractérisé en ce que le dit deuxième couvercle (42) incluant les pistons (26) de pompe est réalisé en fonte.

## Patentansprüche

1. Hydraulische Radbremsvorrichtung, insbesondere für die Antiblockier- und/oder Antischlupf-Funktionen von Rädern in einem Bremskreis eines Fahrzeugs, die zwischen einer Kammer eines Hauptzylinders und wenigstens einem Bremsmotor eine Vielzahl von Elektroventilen (36) und eine Hydropumpe enthält, die von einem Elektromotor angetrieben ist, der einen Rotor (10) enthält, der zwischen zwei Lagern (12, 14) angeordnet und in einer Zylinderhülse (20) eingeschlossen ist, wobei dieser Rotor einen Exzenternocken (24) in Drehung versetzt, durch den radiale Kolben (26) hin- und herverschoben werden, dadurch gekennzeichnet, daß der Förderausgang der Pumpe mit den Elektroventilen (36) über Hydraulikschieber (28) mittels Zirkulationskanälen (32, 34) für das Fluid verbunden ist, daß die Zylinderhülse (20) aus Metall besteht, wobei diese Hülse selbst in einem Gehäuse (30) aus nicht magnetischem Material eingeschlossen ist, und daß sich die Zirkulationskanäle (32, 34) für das Fluid und die Elektroventile (36) in dem Gehäuse (30) erstrecken.

2. Hydraulische Radbremsvorrichtung nach Anspruch 1, dadurch gekennzeichnet, daß die Elektroventile (36) und die Zirkulationskanäle Längsachsen aufweisen, die im wesentlichen zu der des Rotors (10) des Motors parallel sind.

3. Hydraulische Radbremsvorrichtung nach Anspruch 1 oder 2, dadurch gekennzeichnet, daß sie überdies wenigstens ein Niederdruckvolumen enthält, das in dem Gehäuse (30) angeordnet ist und eine Längsachse aufweist, die im wesentlichen parallel zu der des Rotors ist.

4. Hydraulische Radbremsvorrichtung nach einem der vorhergehenden Ansprüche, dadurch gekennzeichnet, daß die elektrischen Verbindungen (62, 64, 66, 68, 70) der Elektroventile (36) im wesentlichen in einer gleichen Radialebene liegen.

5. Hydraulische Radbremsvorrichtung nach Anspruch 4, dadurch gekennzeichnet, daß die Radialebene der elektrischen Verbindungen (62, 64, 66, 68, 70) der Elektroventile (36) der Ebene der elektrischen Verbindungen des Rotors (10) im wesentlichen benachbart ist.

6. Hydraulische Radbremsvorrichtung nach einem der vorhergehenden Ansprüche, dadurch gekennzeichnet, daß eines (12) der Lager in einer ersten Verschlußkappe (44) enthalten ist, die ein radiales Ende des Gehäuses (30) abschließt und die elektrischen Steuerschaltungen der Elektroventile des Motors enthält.

7. Hydraulische Radbremsvorrichtung nach Anspruch 6, dadurch gekennzeichnet, daß die erste Verschlußkappe (44) eine zentrale Ausnehmung (54) enthält, in der ein Modul (56) elektrischer Verbindungen aufgenommen ist.

8. Hydraulische Radbremsvorrichtung nach Anspruch 7, dadurch gekennzeichnet, daß eine elektrische Schaltung auf eine Seite des Moduls (56) aufgedruckt ist, um den Motor mit Strom zu versorgen, und daß eine zweite elektrische Schaltung auf der anderen Seite des Moduls (56) aufgedruckt ist, um die Elektroventile (36) mit Strom zu versorgen.

9. Hydraulische Radbremsvorrichtung nach einem der Ansprüche 6 bis 8, dadurch gekennzeichnet, daß eine erste Platte (46) zwischen der ersten Verschlußkappe (44) und dem Gehäuse (30) angeordnet ist, um die Hydraulikverbindungen zwischen diesen zu schaffen.

10. Hydraulische Radbremsvorrichtung nach einem der vorhergehenden Ansprüche, dadurch gekennzeichnet, daß das andere Lager (14) in einer zweiten Verschlußkappe (42) enthalten ist, die das andere radiale Ende des Gehäuses (30) abschließt und radiale Pumpenkolben (26) sowie Hydraulikschieber (28) einschließt.

11. Hydraulische Radbremsvorrichtung nach Anspruch 10, dadurch gekennzeichnet, daß der Exzenternocken (24) zwischen zwei Lagern (14, 16) angeordnet ist, die in der zweiten Verschlußkappe (42) enthalten sind.

12. Hydraulische Radbremsvorrichtung nach Anspruch 10 oder 11, dadurch gekennzeichnet, daß eine zweite Platte (40) zwischen dem Gehäuse (30) und der zweiten Verschlußkappe (42) angeordnet ist, um die Hydraulikverbindungen zwischen diesen zu schaffen.

13. Hydraulische Radbremsvorrichtung nach einem der Ansprüche 6 bis 12, dadurch gekennzeichnet, daß ein Befestigungsmittel (50, 52) die Verschlußkappen für die Hydraulikteile dichtend fest gegen das Gehäuse hält.

14. Hydraulische Radbremsvorrichtung nach einem der vorhergehenden Ansprüche, dadurch gekennzeichnet, daß von den Gehäusen (30) und Verschlußkappen (42, 44) zumindest eines bzw. eine aus duroplastischem Material hergestellt ist.

15. Hydraulische Radbremsvorrichtung nach einem der vorhergehenden Ansprüche 1 bis 13, dadurch gekennzeichnet, daß von dem Gehäuse (30) und den Verschlußkappen (42, 44) wenigstens eines bzw. eine aus Aluminium hergestellt ist.

16. Hydraulische Radbremsvorrichtung nach einem der vorhergehenden Ansprüche, dadurch gekennzeichnet, daß die die Pumpenkolben (26) enthaltende zweite Verschlußkappe (42) aus Gußeisen hergestellt ist.

## Claims

1. Hydraulic wheel-braking device, especially for wheel anti-lock and/or anti-slip functions in a braking system for a vehicle, comprising, between a chamber of a master cylinder and at least one brake motor, a plurality of solenoid valves (36) and a hydraulic pump driven by an electric motor including a rotor (10) arranged between two bearings (12, 14) and enclosed in a cylindrical sleeve (20), this rotor driving in rotation an eccentric cam (24) imparting an alternating translational movement to radial pistons (26), characterised in that the delivery outlet of said pump is connected to said solenoid valves (36) via hydraulic slides (28) by means of fluid circulation channels (32, 34), in that said cylindrical sleeve (20) is made of metallic material, this sleeve itself being enclosed in a housing (30) made of non-magnetic material, and in that the fluid circulation channels (32, 34) and the solenoid valves (36) extend in said housing (30).

2. Hydraulic wheel-braking device according to Claim 1 or 2, characterised in that said solenoid valves (36) and said circulation channels have longitudinal axes substantially parallel to that of the rotor (10) of said motor.

3. Hydraulic wheel-braking device according to Claim 1 or 2, characterised in that it comprises, furthermore, at least one low-pressure capacity arranged in said housing (30) and having a longitudinal axis substantially parallel to that of said rotor.

4. Hydraulic wheel-braking device according to any of the preceding claims, characterised in that the electrical connections (62, 64, 66, 68, 70) of said solenoid valves (36) are substantially in the same radial plane.

5. Hydraulic wheel-braking device according to Claim 4, characterised in that said radial plane of the electrical connections (62, 64, 66, 68, 70) of said solenoid valves (36) is substantially adjacent to the plane of the electrical connections of said rotor (10).

6. Hydraulic wheel-braking device according to any of the preceding claims, characterised in that one (12) of said bearings is included in a first cover (44) closing one radial end of said housing (30) and containing the electrical control circuits of said solenoid valves and of said motor.

7. Hydraulic wheel-braking device according to Claim 6, characterised in that said first cover (44) has a central recess (54), in which an electrical connection module (56) is accommodated.

8. Hydraulic wheel-braking device according to Claim 7, characterised in that an electrical circuit is printed on one face of said module (56), for the purpose of supplying power to said motor, and a second electrical circuit is printed on the other face of said module (56) for the supply of electricity to said solenoid valves (36).

9. Hydraulic wheel-braking device according to any of Claims 6 to 8, characterised in that a first plate (46) is arranged between said first cover (44) and said housing (30) in order to ensure the hydraulic connections of one to the other.

10. Hydraulic wheel-braking device according to any of the preceding claims, characterised in that the other (14) of said bearings is included in a second cover (42) closing the other radial end of said housing (30) and enclosing radial pump pistons (26) and hydraulic slides (28).

11. Hydraulic wheel-braking device according to Claim 10, characterised in that said eccentric cam (24) is arranged between two bearings (14, 16) included in said second cover (42).

12. Hydraulic wheel-braking device according to Claim 10 or 11, characterised in that a second plate (40) is arranged between said housing (30) and said second cover (42) in order to ensure the hydraulic connections of one to the other.

13. Hydraulic wheel-braking device according to any of Claims 6 to 12, characterised in that a fastening means (50, 52) retains said covers firmly against said housing sealingly for the hydraulic parts.

14. Hydraulic wheel-braking device according to any of the preceding claims, characterised in that at least one of said housings (30) and covers (42, 44) is produced from a thermosetting material.

15. Hydraulic wheel-braking device according to any of the preceding Claims 1 to 13, characterised in that at least one of said housing (30) and covers (42, 44) is produced from aluminum.

16. Hydraulic wheel-braking device according to any of the preceding claims, characterised in that said second cover (42) which includes the pump pistons (26) is produced from cast iron.
